# EUROPEAN PATENT APPLICATION

(11) **EP 4 621 216 A1**
(43) Date of publication of application: **24.09.2025**
(21) Application number: 23892031.8
(22) Date of filing: 16.11.2023
(51) Int. Cl.: F03D 5/00, F03D 13/25, F03B 13/20, F03B 13/26

(54) **POWER CONVERSION DEVICE CONNECTED TO MOVING BODY**

(30) Priority: 20.11.2022 KR 20220002715 U; 13.11.2023 KR 20230156342
(71) Applicant: Chae, Min Ho, Changwon-si Gyeongsangnam-do 51226 (KR)
(72) Inventor: Chae, Min Ho, Changwon-si Gyeongsangnam-do 51226 (KR)
(74) Representative: Cabinet Chaillot
(86) International application number: PCT/KR2023/018437
(87) International publication number: WO 2024/106968

(57) **Abstract**

The present invention relates to a power conversion device connected to a moving body. In order to implement this, the present invention comprises: a moving body having a predetermined weight so as to be movable in various directions by means of the force of external fluid; a support housing for supporting the moving body; a connector for connecting the support housing and the moving body; hinge shafts formed at a plurality of joint portions provided at the connector, so as to enable joint motion; and a power conversion part provided at the hinge shaft so as to convert motive power of the moving body.

## Description

### [Technical Field]

The present invention relates to a device for converting power connected to a moving body and, more specifically, to a device for converting power connected to the moving body, capable of more efficiently converting power by utilizing kinetic energy of the moving body moving in various directions and atypical directions.

### [Background Art]

In general, in order to produce electricity, thermal power, water power, solar power, wind power, tidal power, etc. are used.

In particular, in the case of a power generation device using wind power or tidal power, there is a limit to power generation efficiency because power is generated only by kinetic energy in a limited direction according to rotational motion or vertical motion.

Therefore, there is a need for various types of power conversion technologies such as electric power generation by utilizing kinetic energy in various directions such as a twist rim motion, a diagonal motion, or a spiral motion.

### [Description of the Invention]

### [Technical Problem]

The present invention is proposed to solve the problems in the related art, and an object of the present invention is to use various power conversions such as power generation by using kinetic energy of various movements of a moving body.

### [Solution to Problem]

To achieve the above objective, the power conversion device of the present invention comprises: a moving body having a predetermined weight and capable of flowing in various directions by external fluid forces; a connector configured to be connected to the moving body; a joint portion formed at a connection area between the connector and the moving body; and a power conversion part provided at the joint portion for converting the kinetic energy of the moving body.

In addition, the moving body may be any one selected from the group consisting of a cylindrical moving body having a cylindrical shape, a rectangular moving body having a rectangular shape, a shock-absorbing floating moving body that absorbs external impacts, and a floating moving body driven by waves or ocean currents.

### [Advantageous Effects]

The power conversion device of the present invention maximizes energy efficiency by using rotational kinetic energy of a hinge connection unit to convert various powers when a moving body of a certain weight is moved by external force such as wind force, tidal force, or buoyancy.

### [Description of Drawings]

FIG. 1 is a view illustrating a structure of a power conversion device in which a cylindrical moving body is disposed inside a movable housing, according to a first embodiment of the present invention.
FIG. 2 is a front view illustrating the power conversion device in the present invention.
FIG. 3 is a side view illustrating the power conversion device in the present invention.
FIG. 4 is a cross-sectional view illustrating a part A of FIG. 2.
FIG. 5 is a view illustrating a structure of a power conversion device in which a rectangular parallelepiped moving body is disposed inside a movable housing, according to a second embodiment of the present invention.
FIG. 6 is a view illustrating a state in which a floating moving body is connected by a connector according to a third embodiment of the present invention.
FIG. 7 is a detailed structure of the connection body in the third embodiment of the present invention.
FIG. 8 is an exploded view illustrating a rotary boom internal power generation device in the third embodiment of the present invention.
FIG. 9 is an exploded view illustrating a rotary conversion planetary gear component in the third embodiment of the present invention.
Fig. 10 is an exploded view of a rotationally transforming planetary gear component according to the third embodiment of the present invention.
Fig. 11 is a structural diagram showing a state in which a plurality of floating bodies are connected at the top by a connector according to a fourth embodiment of the present invention.
Fig. 12 is an operational state diagram of the floating bodies in the fourth embodiment of the present invention.
Fig. 13 is a structural diagram showing a state in which a plurality of floating bodies are connected at the middle by a connector according to a fifth embodiment of the present invention.
Fig. 14 is a detailed structural diagram of the connector in the fifth embodiment of the present invention.
Fig. 15 is an exploded view of a connector in a sixth embodiment of the present invention.
Fig. 16 is a detailed structural diagram of a power conversion device according to a seventh embodiment of the present invention.

### [Best Mode of the Invention]

The embodiments of the present invention may be modified in various forms, and the scope of the present invention should not be construed as being limited to the embodiments described in detail below. The present embodiment is provided to more completely describe the present invention to those skilled in the art.

Therefore, the shape and the like of the components expressed in the drawings may be exaggerated to emphasize a clearer description. It should be noted that the same components in each drawing are denoted by the same reference numerals in some cases. In addition, a detailed description of the functions and configurations of known technologies determined to unnecessarily obscure the gist of the present invention may be omitted.

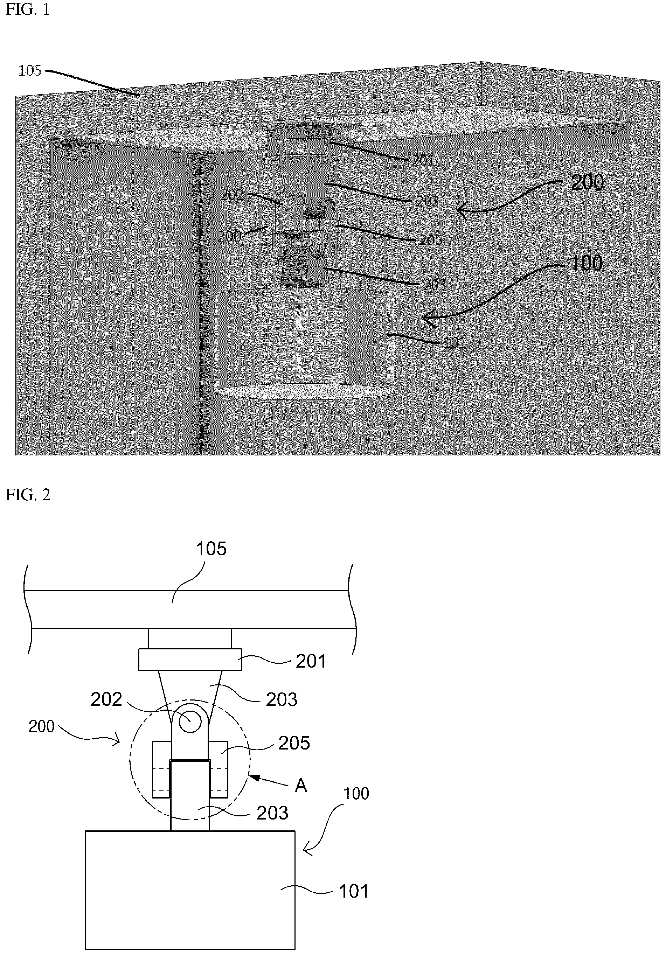

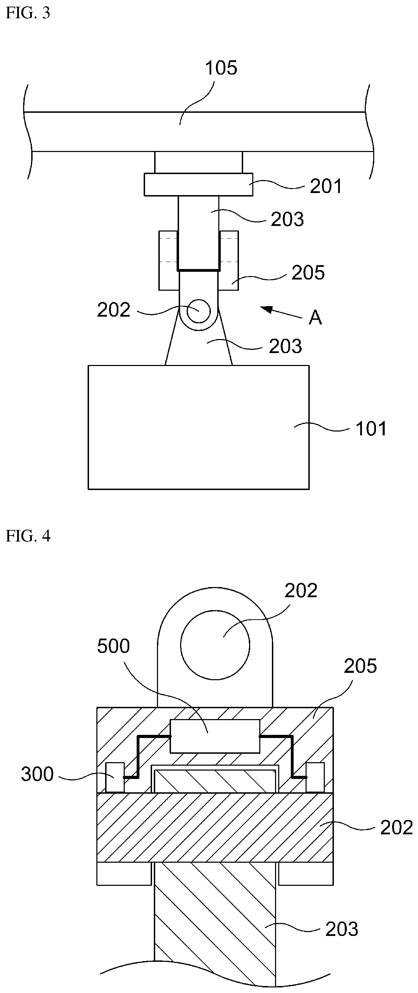

First, a configuration of a power conversion device according to one embodiment of the present invention will be described with reference to FIGS. 1 to 6 as follows.

In this embodiment, the power conversion device includes: a moving body (100) having a certain weight and capable of moving in various directions by the force of external fluids such as wind, vibration, or tidal power; a cubic-shaped support housing (105) that supports the moving body (100); a connector (200) for connecting the support housing (105) and the moving body (100); a hinge shaft (202) formed at multiple joint portions of the connector (200) to enable joint movement; and a power conversion part provided on the hinge shaft (202) to convert the kinetic energy of the moving body (100).

### [Embodiments of the Invention]

Hereinafter, specific embodiments of the present invention will be described in detail with reference to the accompanying drawings.

First, the configuration of a power conversion device connected to a moving body according to a first embodiment of the present invention will be described with reference to FIGS. 1 to 4 as follows.

It can be seen that the moving body (100) is a cylindrical moving body (101) having a cylindrical shape.

Meanwhile, in this embodiment, the power conversion part includes a gear unit (300), in which gears engage with each other on both sides of the hinge shaft (202), and a power generation unit (500) connected to the gear unit (300) for generating electricity.

In addition, a rotary bearing (201) is provided at a connecting part between the connector (200) and the support housing (105) to enable rotational movement of the moving body (100).

It can also be seen that the connector (200) is connected to a bracket (203) and a rotary boom (205), which form a vertically symmetrical structure.

The operational effects of the moving body-coupled power conversion device of the present invention, which has the above-described configuration, will now be described.

The power conversion device of the present invention can generate electricity by converting the kinetic energy generated by the movement of the moving body (100) when installed either on land or at sea.

Specifically, when the moving body (100) moves due to external forces such as wind or tidal power, rotational force is generated within a certain angular range at multiple hinge shaft (202) locations. Since the gear unit (300) at the point of rotation is connected to the power generation unit (500), electricity is produced and stored.

In particular, since a rotating shaft (not shown) is also provided in the rotary bearing (201) area, electricity can also be generated from power conversion even during the horizontal rotation of the moving body (100).

Therefore, the power conversion device of the present invention maximizes energy efficiency by utilizing the rotational kinetic energy of the hinge connection portion when a weighted moving body is moved by external forces such as wind, tidal power, or buoyancy, enabling it to be applied to various types of power conversion.

In particular, the electrical and thermal energy generated through power conversion can be utilized immediately or stored in a separate storage facility for later use, providing significant advantages.

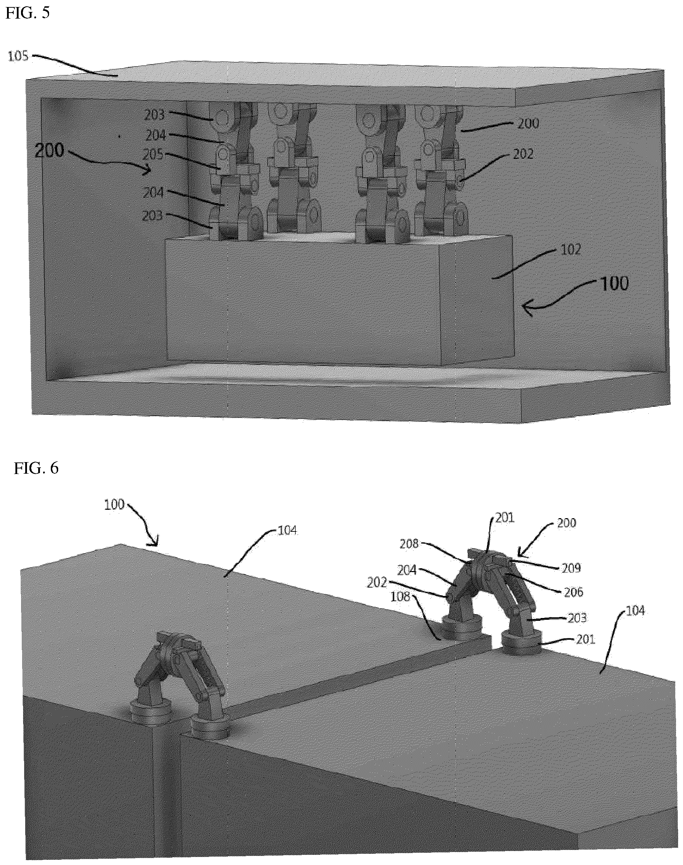

Meanwhile, Fig. 5 illustrates the configuration of a power conversion device according to a second embodiment of the present invention. In this embodiment, the moving body (100) provided inside the support housing (105) is a rectangular parallelepiped-shaped moving body (102). It can also be seen that a rotary boom (204) is connected between the bracket (203) and the rotary boom (205), allowing free rotational movement in a perpendicular direction between the two components.

With such a configuration, as the rectangular parallelepiped-shaped moving body (102) flows in various directions due to external forces, electricity can be generated continuously through power conversion at each hinge shaft (202) provided in the connector (200).

In addition, FIGS. 6 to 10 show the configuration according to a third embodiment of the present invention. In this embodiment, the power conversion device includes: multiple moving bodies (100) having a certain weight, capable of multidirectional movement by the force of an external fluid; a connector (200) that interconnects the moving bodies (100) from above; multiple hinge shafts (202) installed at joint areas of the connector (200) to allow for joint movement; and power conversion part installed on the hinge shafts (202) to convert the kinetic energy of the moving bodies (100).

In this embodiment, the moving body (100) is configured as floating-type moving bodies (104), driven by waves or ocean currents.

In addition, the connector (200) has a symmetrical structure along the left and right sides. At the junctions between the symmetrical connectors and the moving body (100), rotary bearings (201) are installed. At the upper ends of the rotary booms (204) on both sides, a boom angle limiter (208) of a certain length is provided to restrict the rotation angle of the rotary boom (204). Also included are a connecting arm (206) that links the pair of rotary booms (204) at the top, and a rectangular bar-shaped arm angle balancing device (209) to maintain lateral balance of the connecting arm (206).

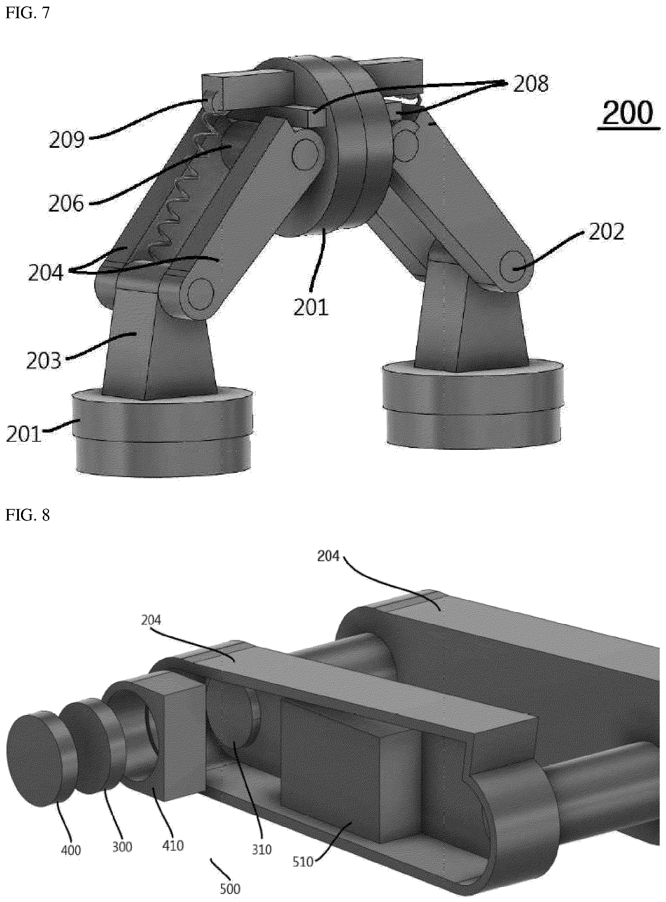

Meanwhile, as shown in FIG. 8, the interior of the rotary boom (204) includes a gear unit (300) consisting of a one-way rotational planetary gear system, a speed-increasing planetary gear (400), and a power generation unit (500). Rotational force is transferred from the hinge shaft (202) to the gear unit (300) via an input shaft (310). The speed-increasing planetary gear (400) and gear unit (300) are housed within a planetary gear case (410).

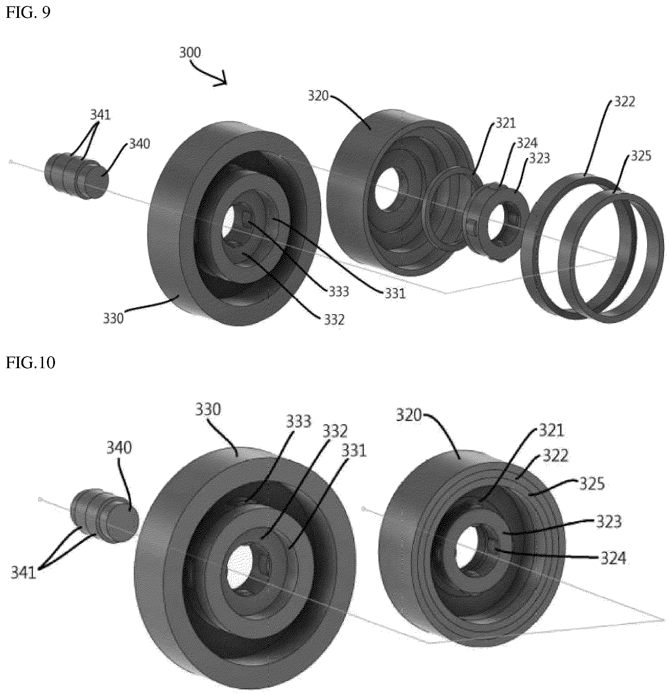

As shown in FIGS. 9 and 10, the gear unit (300) includes a forward one-way clutch (321), a reverse one-way clutch (322), an input-side carrier (323), input-side planetary gears (324), and an input-side ring gear (325), all assembled within an inner case (320). It also includes a gear case (330) comprising a ring gear (331), a carrier (332), and planetary gears (333). In the drawings, a reference numeral 340 indicates the output shaft, and a reference numeral 341 indicates a sun gear.

When the power conversion device of the present invention, having such a configuration, is installed at sea, floating bodies (104) float on the water surface and move due to waves and ocean currents. This motion causes rotational kinetic energy to be transmitted to the hinge shafts (202) through the connector (200) linking both sides of the floating bodies (104), enabling electricity generation in the power generation unit (500) via power conversion.

In particular, the rotational force transferred to the input shaft (310) by the movement of the rotary boom (204) is further transmitted through the gear unit (300) and the speed-increasing planetary gear (400), allowing for speed amplification. This results in improved power generation efficiency.

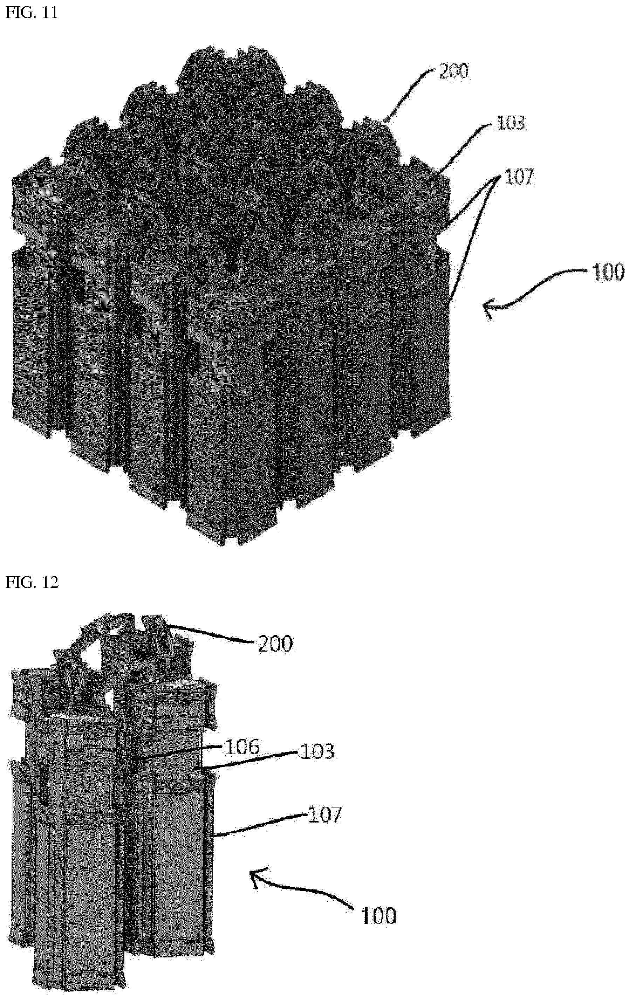

In addition, FIGS. 11 and 12 illustrate the configuration according to a fourth embodiment of the present invention. The moving body (100) is composed of an impact-absorbing floating body (103) capable of absorbing external shocks. Each of these impact-absorbing floating bodies (103) is interconnected by a flow limiting unit (106) to restrict the range of movement between them, and an impact absorbing unit (107) is formed on the outer side to cushion external impacts.

With such a configuration, multiple impact-absorbing floating bodies (103) float on the water surface, and as they are subjected to the force of waves and ocean currents, power conversion can take place. During this process, the flow limiting unit (106) appropriately restricts the range of motion, while the impact absorbing unit (107) helps prevent damage to the impact-absorbing floating bodies (103) from external shocks.

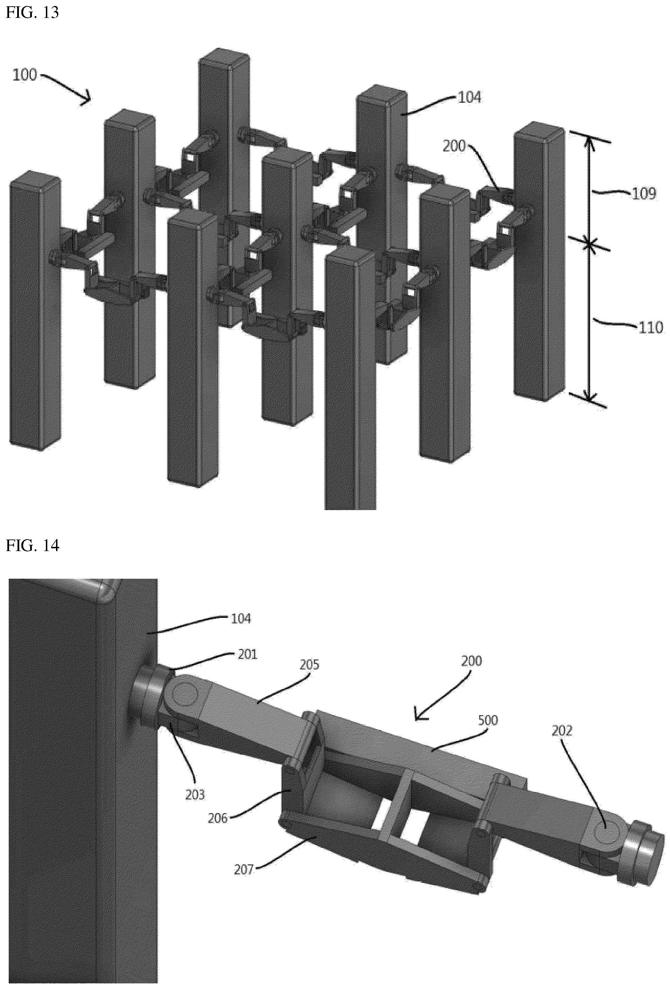

In addition, FIGS. 13 and 14 illustrate the configuration according to the fifth embodiment of the present invention. A plurality of floating bodies (104) are respectively configured such that a buoyancy unit (109) is provided on the upper side, and a ballast unit (110) is formed on the lower side, with these bodies being interconnected by a connecting member (200).

Furthermore, in the connector (200) that links both sides, the connecting arms (206) on each side are joined by a truss boom (207), and it can be seen that a power generation unit (500) is installed on one side of the truss boom (207).

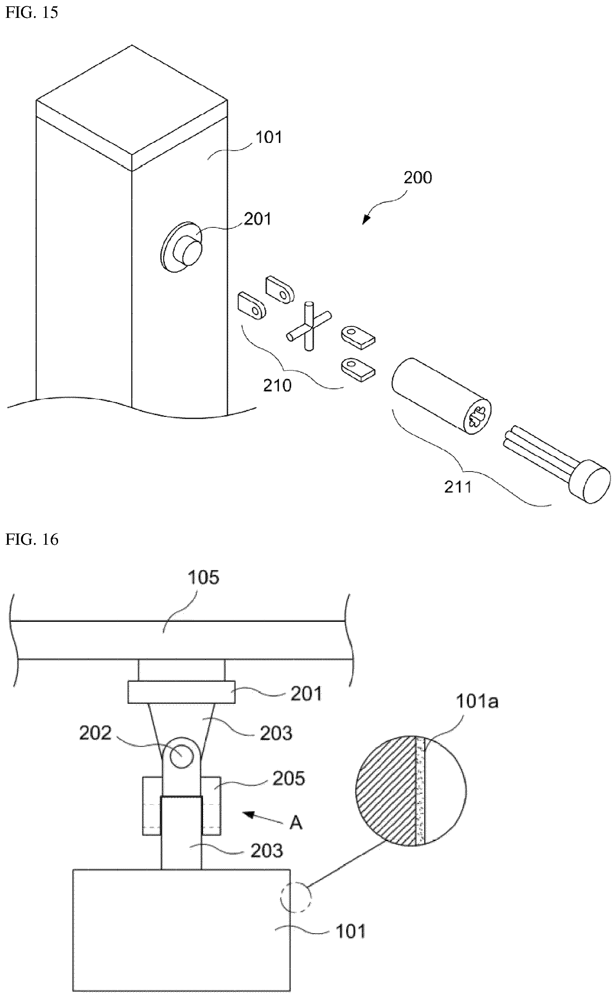

Additionally, FIG. 15 illustrates the configuration of the buoyancy body connector (200) according to a sixth embodiment of the present invention. The connection part of the floating body (104) is sequentially connected with a rotary bearing (201), a universal joint (210), and a spline (211). On the opposite side of the spline (211), the connection to the floating body is made in the reverse order via another universal joint and rotary bearing.

Through this configuration, power conversion can be achieved via rotational movement in various directions, while the spline (211) enables control of length extension and contraction.

Additionally, FIG. 16 illustrates the configuration according to a seventh embodiment of the present invention, in which a protective layer (101a) is coated on the surface of the cylindrical movable body (101) of this embodiment to prevent surface contamination and provide protection.

In this case, it is preferable that the protective layer (101a) is composed by mixing the following components in the respective proportions: 10-30 wt% polysulfone resin, 5-20 wt% dimethylacetamide, 10-30 wt% epoxy bitrimer resin, 10-20 wt% potassium chromate, 1-10 wt% cobalt naphthenate, 5-10 wt% barium sulfate, 5-20 wt% calcium carbonate, 1-10 wt% polybenzimidazole, 1-10 wt% isoflavonoids, 1-10 wt% polycaprolactone, and 1-10 wt% sodium fluoride.

With this configuration, during the process in which the cylindrical movable body (101) is subjected to flow by external forces such as wind or tidal currents, the protective layer (101a) can prevent damage caused by collisions with surrounding structures and contamination.

In particular, because the protective layer (101a) contains dimethylacetamide and epoxy bitrimer resin, it enhances cushioning capability. Potassium chromate functions to ensure uniform coating thickness during the coating process. Cobalt naphthenate and barium sulfate improve surface lubricity, thereby preventing adhesion of foreign substances and contamination. In addition, calcium carbonate increases the coating's density, enhancing its durability. Polybenzimidazole and isoflavonoids help prevent discoloration and deterioration of the coating, respectively, while polycaprolactone provides an advanced effect by improving coating stability through its catalytic interaction with polysulfone resin.

Although specific embodiments of the present invention have been described and illustrated above, it will be apparent to those skilled in the art that the structure of the power conversion device of the present invention can be variously modified and implemented.

For example, in the embodiments described, the configuration is explained and illustrated in terms of converting power into electrical energy. However, the power conversion device of the present invention may also be applied in forms that utilize thermal energy or in combination with architectural structures, in addition to electrical energy.

Therefore, such modified embodiments should not be understood as separate from the technical spirit or scope of the present invention, and it should be considered that these variations fall within the scope of the appended claims.

### [Industrial Applicability]

The invention provides the advantage that the electrical energy, thermal energy, or the like generated through power conversion can be directly utilized or stored in a separate storage facility for later use.

## Claims

1. A power conversion device comprising:
a moving body having a predetermined weight, configured to flow in various directions by an external fluid force;
a support housing for supporting the moving body;
a connector for interconnecting the support housing and the moving body;
a plurality of hinge shafts provided at joint portions of the connector, configured to enable articulated movement of the joint portions; and
a power conversion part provided on the hinge shafts, configured to convert the kinetic energy of the moving body.

2. A power conversion device comprising:
a plurality of moving bodies, each having a predetermined weight and configured to move in various directions by an external fluid force;
a connector for interconnecting the respective moving bodies;
a plurality of hinge shafts provided at joint portions of the connector, configured to enable articulated movement of the joint portions; and
a power conversion part provided on the hinge shafts, configured to convert the kinetic energy of the moving bodies.

3. The power conversion device of claim 1 or 2, wherein the moving body is any one of a cylindrical moving body having a cylindrical shape, a rectangular parallelepiped moving body having a cuboidal shape, a shock-absorbing floating body configured to absorb external impacts, and a floating body driven by waves or tidal currents.

4. The power conversion device of claim 1 or 2, wherein the power conversion part comprises: a gear unit configured to engage on both sides of the hinge shaft, and a power generation unit connected to the gear unit and configured to generate electricity.

5. The power conversion device of claim 4, wherein a speed-increasing planetary gear unit (400) is connected to one side of the gear unit (300).

6. The power conversion device of claim 1, wherein a rotational bearing is provided at a connection portion between the connector and the support housing.

7. The power conversion device of claim 2, wherein the connector has a bilaterally symmetrical structure in which rotation booms are respectively provided on the left and right sides, a rotational bearing is provided at a connecting portion between the connector and the moving body, an upper end of each of the rotation booms is provided with a boom angle limiting part having a predetermined length to limit a rotation angle of the rotation boom, a connecting arm connecting the pair of rotation booms at the top, and a rectangular bar-shaped arm angle balancing device for maintaining left-right balance of the connecting arm.

8. The power conversion device of claim 3, wherein the floating moving body is provided with a buoyancy unit at an upper portion thereof and a ballast unit at a lower portion thereof.

9. The power conversion device of claim 3, wherein the shock-absorbing floating moving body is provided with a flow limiting unit for limiting a range of movement between the adjacent moving bodies, and an impact absorption unit is formed on an outer side thereof to cushion external impacts.
